# EUROPÄISCHE PATENTSCHRIFT

(11) **EP 2 353 367 B1**
(45) Veröffentlichungstag und Bekanntmachung des Hinweises auf die Patenterteilung: **12.09.2012**
(21) Anmeldenummer: 11000301.9
(22) Anmeldetag: 15.01.2011
(51) Int. Cl.: A01G 3/053

(54) **Motorisch angetriebene, handgeführte Heckenschere**
Motor-driven hand-held hedge trimmer
Taille-haie à main motorisé

(30) Priorität: 28.01.2010 DE 102010005964
(43) Veröffentlichungstag der Anmeldung: 10.08.2011
(73) Patentinhaber: Andreas Stihl AG & Co. KG, 71336 Waiblingen (DE)
(72) Erfinder: Hittmann, Markus, 71384 Weinstadt (DE); Schenk, Ralf, 71384 Weinstadt (DE); Friedrich, Reinhard, 71334 Waiblingen (DE); Mayer, Günter, 74257 Untereisesheim (DE)
(74) Vertreter: Wasmuth, Rolf

(56) Entgegenhaltungen:
- DE-A1- 3 932 339
- US-A- 2 787 111
- US-A- 3 897 630

## Beschreibung

Die Erfindung betrifft eine motorisch angetriebene, handgeführte Heckenschere mit einer Exzentergetriebeanordnung mit den Merkmalen nach dem Oberbegriff des Anspruchs 1.

Bei motorisch angetriebenen, handgeführten Heckenscheren mit zwei gegenläufigen Schermessern kommen neben Pleuelantrieben auch Exzenterantriebe zum Einsatz, bei denen ein drehend angetriebenes Exzenterrad mit zwei um 180° gegeneinander versetzten Exzentern vorgesehen ist. Diese beiden Exzenter greifen in Kulissen der beiden Schermesser ein, wodurch diese oszillierend und gegenläufig angetrieben werden.

In einer vorbekannten Bauform liegen die beiden Schermesser einschließlich ihrer beiden Kulissen unmittelbar übereinander, wobei die beiden Exzenter auf der gleichen Seite des zugehörigen Antriebsrades angeordnet sind und jeweils in eine der beiden Kulissen eingreifen. Derartige Anordnungen sind beispielsweise aus DE 39 32 339 A1, US 3,897,630 und US 2,787,111 bekannt. Dies erleichtert das Auswechseln der Schermesser, da diese bei geöffnetem Getriebegehäuse beide vom Exzenterantrieb abgezogen werden können, ohne das Exzenterrad selbst demontieren zu müssen.

In der Praxis hat sich aber gezeigt, dass beim Aufbringen großer Scherkräfte die die Kulissen umschließenden Antriebsaugen der Scherblätter von den Exzentern axial abheben können, so dass der Antrieb des vom Antriebsrad entfernt angeordneten Schermessers unterbrochen ist. Auch das zwischen dem vorgenannten Schermesser und dem Antriebsrad zwischenliegende Schermesser kann zum Abheben neigen, wobei dann beide Exzenter gleichzeitig in die zugeordnete Kulisse eingreifen. Dies führt dann zu einer Blockade des gesamten Heckenscherenantriebs.

Um das Abheben zu vermeiden, kann ein Deckel aufgebracht werden, der mit einer Gegenkraft die Kulissen der Schermesser in ihrer axialen Lage am Exzenterantrieb hält. Da aber die beiden Schermesser übereinander gestapelt sind, kann ein solcher Deckel eine Haltekraft nur auf das äußere Schermesser ausüben, wobei diese Haltekraft dann auf das darunterliegende Schermesser übertragen wird. Dies führt zu einer erheblichen Reibungserhöhung zwischen den beiden Schermessern und damit zu einem unerwünschten Temperaturanstieg im Exzenterantrieb, was die Dauerschmierung beeinträchtigt. Das Schmierfett kann flüssig werden, austreten oder verbrennen. Insgesamt ist das Verschleißverhalten dieser Anordnung nicht zufriedenstellend.

Der Erfindung liegt die Aufgabe zugrunde, eine gattungsgemäße Heckenschere derart weiterzubilden, dass bei verringerten Reibungsverlusten eine erhöhte Betriebssicherheit gegeben ist.

Diese Aufgabe wird durch eine Heckenschere mit den Merkmalen des Anspruchs 1 gelöst.

Nach der Erfindung wird vorgeschlagen, dass die beiden Schermesser im Bereich ihrer beiden Kulissen Andruckflächen aufweisen, die derart versetzt zueinander angeordnet sind, dass sie zumindest über einen Teil des Verstellweges der Schermesser freiliegen, und dass zwei Niederhalter vorgesehen sind, die unabhängig voneinander auf je eine zugeordnete Andruckfläche einwirken.

Durch die erfindungsgemäße Anordnung kann auf die beiden Andruckflächen unabhängig voneinander und unmittelbar eine Haltekraft ausgeübt werden, ohne dass diese Haltekraft durch das äußere Schermesser hindurch zum inneren Schermesser hin übertragen werden muss. Es tritt demnach keine zusätzliche, durch die Haltekraft bedingte Reibung zwischen den beiden Schermessern ein. Reibung und Verschleiß sind verringert. Auch das reibungs-bedingte Temperaturaufkommen ist eingeschränkt, so dass die Fettfüllung der Exzentergetriebeanordnung ohne Beeinträchtigung ihre Schmierwirkung entfalten kann. Die bei hohen Lasten erforderliche Antriebsleistung ist verringert, während die verschleißbedingte Lebensdauer erhöht ist.

Es kann zweckmäßig sein, die Andruckflächen beispielsweise seitlich der Kulissen anzuordnen, wobei dann die Andruckfläche des ersten Schermessers beispielsweise auf der linken Seite und die Andruckfläche des zweiten Schermessers auf der gegenüberliegenden rechten Seite liegt. Auf diese Weise wird vermieden, dass sich die beiden Andruckflächen gegenseitig abdecken, so dass direkt und unmittelbar darauf mittels der Niederhalter eine Andruckkraft ausgeübt werden kann. In vorteilhafter Weiterbildung weisen die Schermesser jeweils einen parallel zum Verstellweg verlaufenden Andruckfortsatz auf, wobei die Andruckfortsätze an einer in Richtung des Verstellweges den Scherenabschnitten gegenüberliegenden Rückseite der Schermesser angeordnet und in einer quer zum Verstellweg liegenden Seitenrichtung seitlich gegeneinander versetzt sind. Die Andruckflächen sind hierbei an den Andruckfortsätzen ausgebildet. Durch den seitlichen Versatz der beiden Andruckfortsätze wird unabhängig vom Verstellweg ein gegenseitiges Abdecken vermieden. Da die Andruckfortsätze an der Rückseite angeordnet sind und sich in der Längsrichtung der Schermesser bzw. in Richtung des Verstellweges erstrecken, ist in der Seitenrichtung ein geringer Bauraum erforderlich, wodurch die Anordnung schlank und kompakt gehalten werden kann. Seitliche Exzentrizitäten bei der Krafteinleitung sind minimiert.

In vorteilhafter Weiterbildung weisen die Andruckfortsätze mit ihren Andruckflächen eine Länge auf, die mindestens etwa gleich dem Verstellweg ist. Hierdurch ist sichergestellt, dass die Niederhalter zumindest näherungsweise über den gesamten Verstellweg auf die zugeordneten Andruckflächen einwirken können. Die Niederhaltewirkung bleibt demnach zumindest näherungsweise über den gesamten Verstellweg erhalten.

Zusätzlich kann es zweckmäßig sein, dass die Schermesser seitlich der Kulissen Gleitflächen aufweisen, mittels derer sie aufeinander abgleiten, wobei das vom Antriebsrad entfernt liegende zweite Schermesser in Überdeckung mit der zugeordneten Gleitfläche mindestens eine weitere Andruckfläche aufweist, und dass ein weiterer, auf die weitere Andruckfläche einwirkender Niederhalter vorgesehen ist. Insbesondere liegen die Gleitflächen, die weiteren Andruckflächen und die weiteren Niederhalter bezogen auf den Verstellweg sich paarweise gegenüber. Die vorstehend beschriebene Haltewirkung an den Andruckflächen wird hierdurch ergänzt, so dass die Anordnung insgesamt sehr steif ist. Zwar wird im Bereich der weiteren Niederhalter und zugehörigen weiteren Andruckflächen die Haltekraft unmittelbar nur auf das äußere Schermesser und durch dieses hindurch mittelbar auf das innere Schermesser übertragen. Die hierbei entstehende Zusatzreibung ist jedoch gering, da die eigentliche Niederhaltewirkung an den freiliegenden Andruckflächen ausgeübt wird, so dass hier nur eine unterstützende bzw. die Anordnung aussteifende Niederhaltewirkung ohne nennenswerte Reibkrafterhöhung zu beobachten ist. Die symmetrische Anordnung führt zu einer gleichmäßigen Lasteinleitung, die über den gesamten Verstellweg der Schermesser bzw. über den gesamten Drehwinkel des Exzenterantriebes aufrecht erhalten bleibt.

Es ist ein Getriebegehäuse zur Aufnahme des Exzenterrades sowie der Schermesser im Bereich ihrer Kulissen und ihrer Andruckflächen vorgesehen. Hierbei kann es zweckmäßig sein, die Niederhalter direkt am Getriebegehäuse bzw. an dessen Gehäusedeckel auszubilden. Vorteilhaft ist aber im Getriebegehäuse eine Halteplatte mit den Niederhaltern angeordnet, wobei insbesondere der mindestens eine und bevorzugt die beiden weiteren auf die seitlichen Andruckflächen wirkenden Niederhalter an der Halteplatte angeordnet sind. Hierdurch ist das Gehäuse entlastet, so dass es aus dünnwandigem und leichtgewichtigem Leichtmetallguss oder dgl. hergestellt sein kann. Zur Aufnahme der hohen Haltekräfte kann unabhängig von der Materialwahl des Getriebegehäuses die Halteplatte beispielsweise aus Stahlblech oder einem anderen hochfesten Material hergestellt werden.

Bevorzugt ist die Halteplatte einschließlich der Niederhalter und insbesondere einschließlich des mindestens einen weiteren Niederhalters einteilig als Blechformteil ausgebildet. Eine preisgünstige Fertigung ist mit hoher Tragfähigkeit bzw. mit hohen aufbringbaren Niederhaltekräften vereint.

In einer bevorzugten Ausführungsform ist die Halteplatte zwischen der Gehäuseschale und dem Gehäusedeckel des Getriebegehäuses insbesondere durch Verschraubung und/oder durch Klemmung und/oder durch Formschluss gehalten. Nach Abnahme des Gehäusedeckels lässt sich die Halteplatte leicht entfernen, um beispielsweise die Schermesser auswechseln zu können. Außerdem führt die Befestigung der Halteplatte zwischen Gehäuseschale und Gehäusedeckel zu einer günstigen und großflächig verteilten Krafteinleitung, was das Bestreben nach Leichtbau begünstigt.

Es kann zweckmäßig sein, den Achszapfen des Exzenterrades im Gehäusedeckel zu lagern. Bevorzugt weist die Halteplatte eine Lageröffnung für den genannten Achszapfen auf. Da die Halteplatte aufgrund der hohen aufzubringenden Haltekräfte entsprechend kräftig dimensioniert und aus einem entsprechenden Material gefertigt sein muss, kann diese ohne Zusatzaufwand auch als hochbelastbare Lagereinheit für den Achszapfen des Exzenterrades dienen, wodurch das Getriebegehäuse weiter entlastet wird.

Ein Ausführungsbeispiel der Erfindung ist nachfolgend anhand der Zeichnung näher beschrieben. Es zeigen:
- Fig. 1: in einer perspektivischen Ansicht eine Heckenschere mit einer erfindungsgemäß ausgeführten Exzentergetriebeanordnung für zwei gegenläufig angetriebene Schermesser;
- Fig. 2: in einer perspektivischen Unteransicht die Exzentergetriebeanordnung nach Fig. 1 mit abgenommenem Gehäusedeckel und mit einer Halteplatte zum unmittelbaren Niederhalten der beiden Schermesser am Exzenterrad;
- Fig. 3: die Anordnung nach Fig. 2 mit abgenommener Halteplatte und weiteren Einzelheiten zur Ausgestaltung des Exzenterantriebes und der Schermesser mit angeformten Andruckfortsätzen;
- Fig. 4: eine Längsschnittdarstellung der Anordnung nach Fig. 2 entlang der dort dargestellten Schnittlinie IV-IV mit der Messerstellung nach Fig. 3 und mit auf das erste Schermesser einwirkendem Niederhalter;
- Fig. 5: die Anordnung nach Fig. 3 mit um 180° gedrehtem Exzenterrad und entsprechend gegeneinander versetzten Schermessern;
- Fig. 6: einen Längsschnitt durch die Anordnung nach Fig. 2 entlang der dort dargestellten Schnittlinie VI-VI mit der Schermesserlage nach Fig. 5 und mit am zweiten Schermesser anliegendem Niederhalter.

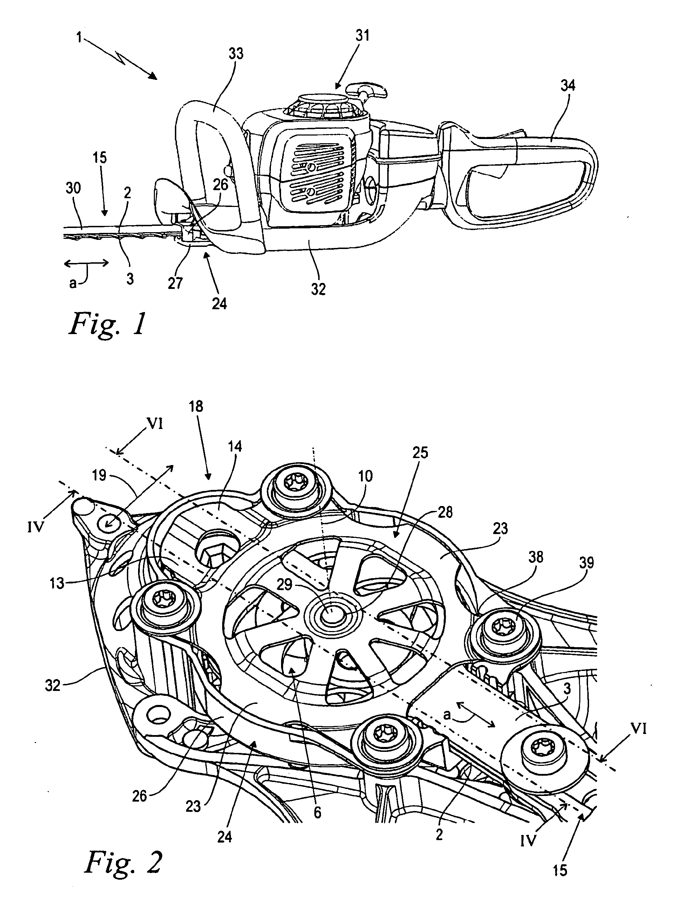

Fig. 1 zeigt in perspektivischer Ansicht eine handgeführte Heckenschere 1 mit einem nicht näher dargestellten Antriebsmotor 31, einem Gehäuse 32, einem vorderen Handgriff 33 und einem hinteren Handgriff 34. Der Antriebsmotor kann ein Elektromotor für den Netz-oder Akkubetrieb sein und ist im gezeigten Ausführungsbeispiel ein einzylindriger Zweitakt-Verbrennungsmotor. Es kann auch ein Viertakt-Verbrennungsmotor vorgesehen sein.

An dem dem Benutzer abgewandten vorderen Ende des Gehäuses 32 ist eine erfindungsgemäße Exzentergetriebeanordnung angebracht, die zwei gegenläufig um einen Verstellweg a angetriebene Schermesser 2, 3 sowie ein Getriebegehäuse 24 mit einer am Gehäuse 32 befestigten oder angeformten Gehäuseschale 26 und mit einem abnehmbaren Gehäusedeckel 27 umfasst. Die beiden Schermesser 2, 3 liegen mit ihrem motornahen Abschnitt im Getriebegehäuse 24 und weisen außerhalb des Getriebegehäuses 24 einen Scherabschnitt 15 mit Schneidzähnen auf, die für das Schneiden von Zweigen oder dgl. vorgesehen sind. Die beiden Schermesser 2, 3 liegen direkt übereinander und sind an einem feststehenden Träger 30 in Längsrichtung über den Verstellweg a oszillierend geführt, wobei die durch den Antriebsmotor 31 angetriebene oszillierende Längsbewegung durch die weiter unten näher beschriebene Exzentergetriebeanordnung erzeugt wird.

Fig. 2 zeigt in einer perspektivischen Unteransicht die erfindungsgemäße Exzentergetriebeanordnung der Heckenschere 1 nach Fig. 1, wobei von der am Gehäuse 32 angeformten Gehäuseschale 26 des Getriebegehäuses 24 der Gehäusedeckel 27 (Fig. 1) abgenommen ist. Teil der erfindungsgemäßen Exzentergetriebeanordnung ist ein weiter unten näher beschriebenes Exzenterrad 6, welches um eine Drehachse 10 mittels des Antriebsmotors 31 (Fig. 1) drehend angetrieben ist, und welches seinerseits die beiden in der parallel zur Drehachse 10 verlaufenden Hochrichtung direkt übereinander liegenden Schermesser 2, 3 oszillierend um den Verstellweg a antreibt.

Senkrecht zur durch die Drehachse 10 vorgegebenen Hochrichtung und senkrecht zur in Richtung des Verstellweges a verlaufenden Längsrichtung liegt eine Seitenrichtung 19. Die Exzentergetriebeanordnung umfasst einen ersten Niederhalter 13 und einen zweiten Niederhalter 14, die in der Seitenrichtung 19 bezogen auf die Längsachse der Anordnung seitlich gegeneinander versetzt sind, und die in weiter unten näher beschriebener Weise auf die beiden Schermesser 2, 3 einwirken. Ergänzend dazu ist noch ein Paar von dritten Niederhaltern 23 vorgesehen, wobei auch diese sich symmetrisch zur Längsachse in der Seitenrichtung 19 gegenüberliegen. Der erste und der zweite Niederhalter 13, 14 sind an einer in Richtung des Verstellweges a den Scherabschnitten 15 gegenüberliegenden Rückseite 18 der Schermesser 2, 3 angeordnet, während die beiden dritten Niederhalter 23 unmittelbar seitlich der Drehachse 10 liegen.

Die Niederhalter 13, 14, 23 können direkt am Getriebegehäuse 24 bzw. dessen Gehäusedeckel 27 (Fig. 1) ausgeformt sein und sind im gezeigten Ausführungsbeispiel durch eine separate Halteplatte 25 gebildet. Die Halteplatte 25 ist einschließlich der Niederhalter 13, 14, 23 einteilig als Blechformteil aus Stahlblech ausgebildet und weist zudem noch eine Lageröffnung 28 auf, in der ein Achszapfen 29 des Exzenterrades 6 drehbar gelagert ist. Die Halteplatte 25 ist zwischen der Gehäuseschale 26 und dem hier abgenommenen, in Fig. 1 dargestellten Gehäusedeckel 27 durch Verschraubung und auch durch Klemmung gehalten. Hierzu weist die Halteplatte 25 einteilig angeformte Schraubaugen 38 auf, die in Ausformungen des Getriebegehäuses 24 bzw. der Halteschale 26 formschlüssig gehalten sind, und durch die Befestigungsschrauben 39 des Gehäusedeckels 27 hindurchgeführt sind. Außerdem sind die äußeren Kanten der Niederhalter 23 seitlich gegen die Wand des Getriebegehäuses 24 bzw. der Halteschale 26 abgestützt. Auf diese Weise ist die Halteplatte 25 starr und fest mit dem Getriebegehäuse 24 verbunden, um die Niederhaltekräfte an den Niederhaltern 13, 14, 23 sowie die Lagerkräfte an der Lageröffnung 28 aufnehmen zu können. Das Getriebegehäuse 24 ist aus dünnwandigem Leichtmetallguss gefertigt, kann aber auch aus einem geeigneten Kunststoffmaterial bestehen.

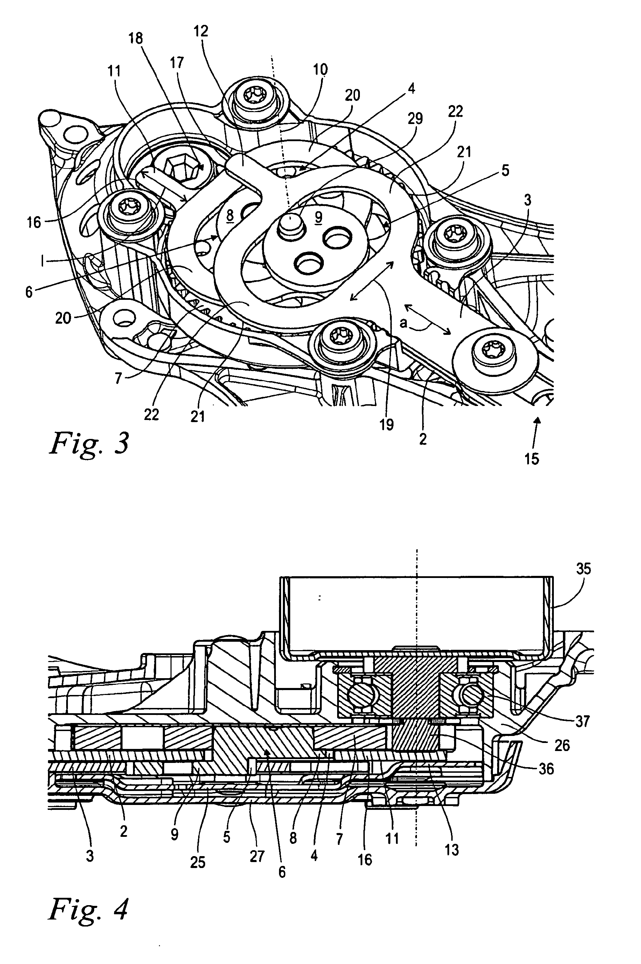

Fig. 3 zeigt die Anordnung nach Fig. 2 mit abgenommener Halteplatte 25. Es ist zu erkennen, dass das Exzenterrad 6 aus einem als Zahnrad ausgebildeten Antriebsrad 7, zwei Exzentern 8, 9 und dem Achszapfen 29 besteht. Die beiden Exzenter 8, 9 sind auf der gleichen Seitenfläche des Antriebsrades 7 angeordnet und drehfest mit dem Antriebsrad 7 verbunden. Beide Exzenter 8, 9 weisen eine Kreisscheibenform auf und sind exzentrisch zur Drehachse 10 mit einem gegenseitigen Phasenversatz von 180° angeordnet. Der erste Exzenter 8 liegt unmittelbar auf der Seitenfläche des Antriebsrades 7, während der zweite Exzenter 9 in der durch die Drehachse 10 vorgegebenen Hochrichtung unmittelbar über dem ersten Exzenter 8 angeordnet ist. Das Antriebsrad 7 und die beiden Exzenter 8, 9 sind miteinander formschlüssig verbunden und hart verlötet.

Im Bereich des Exzenterrades 6 weisen die beiden Schermesser 2, 3 eine rahmenförmige Ausformung als Antriebsauge mit einer inneren ovalen Öffnung auf, wobei sich die Längsachse der ovalen Öffnung in der Seitenrichtung 19 erstreckt. Durch die beiden ovalen Öffnungen ist eine erste Kulisse 4 des ersten Schermessers 2 und eine zweite Kulisse 5 des zweiten Schermessers 3 gebildet, wobei die beiden Schermesser 2, 3 mit ihren beiden Kulissen 4, 5 unmittelbar übereinander liegen. Der erste Exzenter 8 greift in die erste Kulisse 4 des ersten Schermessers 2 ein, während der zweite Exzenter 9 in die zweite Kulisse 5 des zweiten Schermessers 3 eingreift. Durch die angetriebene Drehbewegung der beiden in die Kulissen 4, 5 eingreifenden Exzenter 8, 9 werden die beiden Schermesser 2, 3 gegenläufig um den Verstellweg a in Längsrichtung oszillierend angetrieben. Eine nicht näher dargestellte Längsführung der beiden Schermesser 2, 3 sorgt dafür, dass ausschließlich eine Längsbewegung der beiden Schermesser 2, 3 ohne seitliche Bewegungskomponente hervorgerufen wird.

An den einander zugewandten Flächen der die Kulissen 4, 5 umschließenden Antriebsaugen weisen die beiden Schermesser 2, 3 Gleitflächen 20, 21 auf, an denen die beiden Schermesser 2, 3 im Bereich des Exzenterrades 6 entlang ihres oszillierenden Verstellweges a aufeinander abgleiten. Gegenüberliegend zur Gleitfläche 21 weist das dem Antriebsrad 7 gegenüberliegende zweite Schermesser 3 darüber hinaus noch Andruckflächen 22 auf. Insgesamt sind jeweils zwei Gleitflächen 20, zwei Gleitflächen 21 und zwei Andruckflächen 22 vorgesehen, die sich in der Seitenrichtung 19 paarweise und symmetrisch zur Längsachse der Anordnung gegenüberliegen.

An der in der Längsrichtung den Scherabschnitten 15 gegenüberliegenden Rückseite 18 weisen die beiden Schermesser 2, 3 je einen als Flachzapfen ausgebildeten, in der durch den Verstellweg a vorgegebenen Längsrichtung verlaufenden Andruckfortsatz 16, 17 auf, die direkt an die die Kulissen 4, 5 umschließenden Antriebsaugen einteilig angeformt sind. Die beiden Andruckfortsätze 16, 17 sind in der Seitenrichtung 19 symmetrisch zur Längsachse der Anordnung seitlich gegeneinander versetzt, so dass sie sich entlang des gesamten Verstellweges a gegenseitig nicht abdecken können und nicht aufeinander zur Anlage kommen. Durch die genannte symmetrische Ausgestaltung können zwei identisch ausgebildete Schermesser 2, 3 eingesetzt werden, wobei eines der beiden Schermesser 2, 3 gegenüber dem anderen Schermesser 3, 2 um 180° um dessen Längsachse gedreht darauf zu liegen kommt. An den beiden abgewandt zum Antriebsrad 7 liegenden Flachseiten der Andruckfortsätze 16, 17 sind je eine Andruckfläche 11, 12 ausgebildet, wobei sich die beiden Andruckfortsätze 16, 17 einschließlich ihrer Andruckflächen 11, 12 in Richtung des Verstellweges a über eine Länge 1 erstrecken. Die Länge 1 ist bevorzugt gleich dem Betrag des Verstellweges a oder länger. Außerdem sind die beiden Andruckflächen 11, 12 derart versetzt zueinander angeordnet, dass sie zumindest über einen Teil des Verstellweges a, bevorzugt über den gesamten Verstellweg a freiliegen, dass also insbesondere die erste Andruckfläche 11 des ersten Schermessers 2 entlang des Verstellweges a nicht durch Teile des darüberliegenden zweiten Schermessers 3 abgedeckt wird.

Fig. 4 zeigt eine Längsschnittdarstellung der Anordnung nach Fig. 2 entlang der dort eingetragenen Schnittlinie IV-IV mit aufgesetztem Gehäusedeckel 27 und mit der Messerposition nach Fig. 3, wobei gleiche Merkmale mit gleichen Bezugszeichen versehen sind. In der Gehäuseschale 26 ist ein als Kugellager ausgebildetes Lager 37 eingesetzt, in dem eine zweiteilige Wellenanordnung mit einem Antriebsritzel 36 gelagert ist. Mit der Wellenanordnung ist eine Kupplungsglocke 35 einer Fliehkraftkupplung drehfest verbunden. Das Antriebsritzel 36 greift in das als Zahnrad ausgebildete Antriebsrad 7 des Exzenterrades 6 ein. Oberhalb einer vorgegebenen Kupplungsdrehzahl des Antriebsmotors 31 (Fig. 1) greifen nicht dargestellte Fliehkörper innenseitig in die Kupplungsglocke 35 kraftschlüssig ein, wodurch die Kupplungsglocke 35 einschließlich des Antriebsritzels 36 in Drehung versetzt wird. Diese Drehung wird auf das Exzenterrad 6 übertragen, wodurch die Schermesser 2, 3 in oben beschriebener Weise mittels der Exzenter 8, 9 und der Kulissen 4, 5 bewegt werden.

In der perspektivischen Darstellung nach Fig. 2 ist zu erkennen, dass die beiden an der Halteplatte 25 ausgebildeten Niederhalter 13, 14 in der durch die Drehachse 10 vorgegebenen Hochrichtung gegeneinander höhenversetzt sind. Dieser Höhenversatz ist gleich dem Höhenversatz der beiden aufeinanderliegenden Schermesser 2, 3, die insgesamt eben ausgebildet sind, und demnach auch die beiden Andruckfortsätze 16, 17 einschließlich ihrer Andruckflächen 11, 12 (Fig. 3) den gleichen Höhenversatz zueinander aufweisen.

Der Längsschnittdarstellung nach Fig. 4 ist zu entnehmen, dass der an der Halteplatte 25 ausgebildete erste Niederhalter 13 unmittelbar, also ohne Zwischenlage eines Teiles des zweiten Schermessers 3 an der ersten Andruckfläche 11 des ersten Andruckfortsatzes 16 des ersten Schermessers 2 anliegt und dadurch das Schermesser 2 gegen das Antriebsrad 7 andrückt, ohne dass diese zugeordnete Haltekraft auf das zweite Schermesser 3 einwirkt. Das erste Schermesser 2 mit seiner ersten Kulisse 4 kann demnach nicht vom zugeordneten ersten Exzenter 8 abheben.

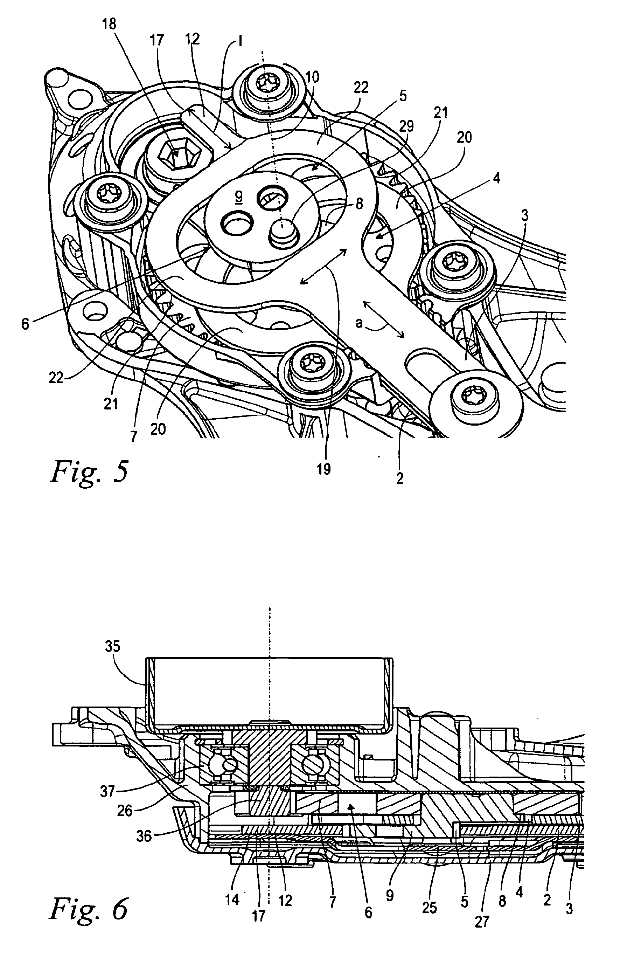

Fig. 5 zeigt die Anordnung nach Fig. 3 mit um 180° gedrehtem Exzenterrad 6, wobei auch hier gleiche Merkmale mit gleichen Bezugszeichen versehen sind. Die beiden Schermesser 2, 3 einschließlich ihrer Andruckfortsätze 16, 17 sind im Vergleich zur Darstellung nach Fig. 3 um den Verstellweg a wechselseitig gegeneinander verschoben. In der hier gezeigten vordersten Position des ersten Schermessers 2 ist dessen Andruckfortsatz 16 mit der zugehörigen Andruckfläche 11 (Fig. 3) gerade eben durch das darüberliegende zweite Schermesser 3 abgedeckt, so dass in dieser vordersten Extremposition der erste Niederhalter 13 abweichend von der Darstellung nach Fig. 4 nicht auf die zugeordnete Andruckfläche 11 einwirkt. Dies kann toleriert werden, da die in dieser Extremposition des ersten Schermessers 2 auftretenden Schnittkräfte und die damit verbundene Abhebetendenz des ersten Schermessers 2 vom zugeordneten ersten Exzenter 8 vernachlässigbar gering ist. Sobald jedoch die Schermesser 2, 3 eine nur geringfügig von der Position nach Fig. 5 abweichende Position einnehmen, übt der Niederhalter 13 seine Stützfunktion auf die Andruckfläche 11 des ersten Schermessers 2 entsprechend der Darstellung nach Fig. 4 aus. Es kann aber auch eine Ausgestaltung zweckmäßig sein, bei der die beiden Andruckflächen 11, 12 entsprechend länger ausgestaltet sind, wobei dann die Stützwirkung über den gesamten Verstellweg a eintritt.

Fig. 6 zeigt eine Längsschnittdarstellung der Anordnung nach Fig. 2 entlang der dort eingetragenen Schnittlinie VI-VI mit der Messerposition nach Fig. 5. In Übereinstimmung mit Fig. 4 sind hier, sofern nicht abweichend angegeben, wieder gleiche Merkmale mit gleichen Bezugszeichen versehen. Der entsprechend der Darstellung nach den Fig. 2 und 4 gegenüber dem ersten Niederhalter 13 höhenversetzte und auch seitlich versetzte Niederhalter 14 liegt an der zweiten Andruckfläche 12 des zweiten Andruckfortsatzes 17 des zweiten Schermessers 3 stützend an und übt dadurch eine Haltekraft auf das zweite Schermesser 3 in der Hochrichtung zum Antriebsrad 7 hin aus, wodurch das zweite Schermesser 3 auch bei hohen Belastungen nicht vom zugeordneten zweiten Exzenter 9 abheben kann. Die Anlage- bzw. Haltekraft wird unmittelbar vom zweiten Niederhalter 14 auf die zweite Andruckfläche 12 ausgeübt, ohne dass Teile des ersten Schermessers 2 dazwischen liegen. Da die beiden Andruckfortsätze 16, 17 entsprechend der Darstellung nach Fig. 3 außerdem seitlich gegeneinander versetzt sind, wird die auf den zweiten Andruckfortsatz 17 einwirkende Haltekraft nicht auf den ersten Andruckfortsatz 16 des ersten Schermessers 2 übertragen.

Insgesamt folgt aus der Darstellung nach den Fig. 2 bis 6, dass die beiden Schermesser 2, 3 unabhängig voneinander und unmittelbar im Bereich des Exzenterrades 6 niedergehalten und am Abheben gehindert werden, ohne dass durch die damit einhergehenden Haltekräfte eine erhöhte Reibung zwischen den beiden Schermessern 2, 3 eintritt. In den beiden Extrempositionen der Schermesser 2, 3 nach den Fig. 3, 4 bzw. den Fig. 5, 6 drückt nur einer der beiden Niederhalter 13, 14 auf den jeweils zugeordneten Andruckfortsatz 16, 17. In allen abweichenden Zwischenpositionen werden die beiden Schermesser 2, 3 an ihren Andruckfortsätzen 16, 17 gleichzeitig, aber ohne gegenseitige Beeinflussung, durch die Niederhalter 13, 14 niedergehalten, wobei sich der zweite Andruckfortsatz 17 des zweiten Schermessers 3 entsprechend der Darstellung nach Fig. 3 gegen das die Kulisse 4 umschließende Antriebsauge des ersten Schermessers 2 abstützt. Die Kulissen 4, 5 können nicht von den zugeordneten Exzentern 8, 9 abheben, so dass eine Kraftübertragung zwischen den Exzentern 8, 9 und den Schermessern 2, 3 auch bei hohen Betriebslasten gewährleistet ist.

In einer nicht dargestellten Zwischenposition zwischen den beiden Extrempositionen der Schermesser 2, 3 nach den Fig. 3, 5 liegen die beiden Exzenter 8, 9 in der Seitenrichtung 19 nebeneinander, wobei die beiden Kulissen 4, 5 deckend übereinander liegen. Hierbei ist der Fall zu berücksichtigen, dass ein gleichzeitiges Abheben beider Kulissen 4, 5 dazu führt, dass der zweite Exzenter 9 in beide angehobene Kulissen 4, 5 gleichzeitig eingreifen kann, was zu einem sofortigen Blockieren des Antriebes führen würde. Auch dies wird durch die Niederhalter 13, 14 und die Andruckfortsätze 16, 17 verhindert. Ergänzend dazu sind aber noch die beiden oben erwähnten Niederhalter 23 vorgesehen, um die Niederhaltewirkung der Niederhalter 13, 14 insbesondere in der vorgenannten mittleren Zwischenposition zu unterstützen und ein Blockieren des Antriebes auszuschließen. Aus der Zusammenschau der Fig. 2, 3 und 5 ergibt sich, dass die beiden Niederhalter 23 auf die zugeordneten Andruckflächen 22 einwirken, die ihrerseits in Überdeckung mit den gegenüberliegenden Gleitflächen 21 liegen. Hierdurch wird insbesondere in der vorgenannten mittleren Zwischenposition eine zusätzliche Haltekraft von den dritten Niederhaltern 23 auf die dritten Andruckflächen 22 des zweiten Schermessers 3 ausgeübt, die sich über die Gleitflächen 21, 20 auch auf das zwischenliegende erste Schermesser 2 überträgt und dadurch die Niederhaltewirkung an den beiden Schermessern 2, 3 im Bereich des Exzenterrades 6 ergänzt bzw. verbessert.

Durch die Anordnung der beiden Andruckfortsätze an der Rückseite der Schermesser können diese in der Seitenrichtung möglichst nahe beieinander angeordnet werden. Der seitliche Versatz zwischen den beiden Andruckfortsätzen 16, 17 ist so gering wie technisch vernünftig umsetzbar gewählt, um Unsymmetrien beim Niederhalten so gering wie möglich zu halten. In Verbindung mit den symmetrisch zur Längsachse angeordneten Andruckflächen 22 entsteht eine zumindest näherungsweise symmetrische Einleitung der Niederhaltekräfte in die beiden Schermesser 2, 3, was die Tendenz zur lastbedingten Verformung verringert.

## Patentansprüche

1. Motorisch angetriebene, handgeführte Heckenschere (1) mit einer Exzentergetriebeanordnung, umfassend zwei gegenläufig um einen Verstellweg (a) angetriebene Schermesser (2, 3) mit je einer Kulisse (4, 5), sowie ein um eine Drehachse (10) drehend angetriebenes Exzenterrad (6) mit einem Antriebsrad (7) und zwei Exzentern (8, 9), wobei die beiden Kulissen (4, 5) unmittelbar übereinanderliegen, und wobei die beiden Exzenter (8, 9) auf der gleichen Seite des Antriebsrades (7) angeordnet sind und jeweils in eine der beiden Kulissen (4, 5) eingreifen,
**dadurch gekennzeichnet, dass** die beiden Schermesser (2, 3) im Bereich ihrer beiden Kulissen (4, 5) Andruckflächen (11, 12) aufweisen, die derart versetzt zueinander angeordnet sind, dass sie zumindest über einen Teil des Verstellweges (a) freiliegen, und dass zwei Niederhalter (13, 14) vorgesehen sind, die unabhängig voneinander auf je eine zugeordnete Andruckfläche (11, 12) einwirken.

2. Heckenschere nach Anspruch 1,
**dadurch gekennzeichnet, dass** die Schermesser (2, 3) jeweils einen Scherabschnitt (15) und jeweils einen parallel zum Verstellweg (a) verlaufenden Andruckfortsatz (16, 17) aufweisen, wobei die Andruckfortsätze (16, 17) an einer in Richtung des Verstellweges (a) den Scherabschnitten (15) gegenüberliegenden Rückseite (18) der Schermesser (2, 3) angeordnet und in einer quer zum Verstellweg (a) liegenden Seitenrichtung (19) seitlich gegeneinander versetzt sind, und wobei die Andruckflächen (11, 12) an den Andruckfortsätzen (16, 17) ausgebildet sind.

3. Heckenschere nach Anspruch 2,
**dadurch gekennzeichnet, dass** die Andruckfortsätze (16, 17) mit ihren Andruckflächen (11, 12) eine Länge (1) aufweisen, die mindestens etwa gleich dem Verstellweg (a) ist.

4. Heckenschere nach einem der Ansprüche 1 bis 3,
**dadurch gekennzeichnet, dass** die Schermesser (2, 3) seitlich der Kulissen (4, 5) Gleitflächen (20, 21) aufweisen, mittels derer sie aufeinander abgleiten, dass das vom Antriebsrad (7) entfernt liegende zweite Schermesser (3) in Überdeckung mit der zugeordneten Gleitfläche (21) mindestens eine weitere Andruckfläche (22) aufweist, und dass ein weiterer, auf die weitere Andruckfläche (22) einwirkender Niederhalter (23) vorgesehen ist.

5. Heckenschere nach Anspruch 4,
**dadurch gekennzeichnet, dass** Gleitflächen (20, 21), weitere Andruckflächen (22) und weitere Niederhalter (23) bezogen auf den Verstellweg (a) sich paarweise gegenüberliegen.

6. Heckenschere nach einem der Ansprüche 1 bis 5,
**dadurch gekennzeichnet, dass** ein Getriebegehäuse (24) zur Aufnahme des Exzenterrades (6) sowie der Schermesser (2, 3) im Bereich ihrer Kulissen (4, 5) und ihrer Andruckflächen (11, 12) vorgesehen ist, und dass im Getriebegehäuse (24) eine Halteplatte (25) mit den Niederhaltern (13, 14) angeordnet ist.

7. Heckenschere nach Anspruch 6,
**dadurch gekennzeichnet, dass** auch der mindestens eine und bevorzugt die beiden weiteren Niederhalter (23) an der Halteplatte (25) angeordnet sind.

8. Heckenschere nach Anspruch 6 oder 7,
**dadurch gekennzeichnet, dass** die Halteplatte (25) einschließlich der Niederhalter (13, 14) und insbesondere einschließlich des mindestens einen weiteren Niederhalters (23) einteilig als Blechformteil ausgebildet ist.

9. Heckenschere nach einem der Ansprüche 6 bis 8,
**dadurch gekennzeichnet, dass** das Getriebegehäuse (24) eine Gehäuseschale (26) und einen Gehäusedeckel (27) aufweist, wobei die Halteplatte (25) zwischen der Gehäuseschale (26) und dem Gehäusedeckel (27) insbesondere durch Verschraubung und/oder durch Klemmung und/oder durch Formschluss gehalten ist.

10. Heckenschere nach einem der Ansprüche 6 bis 9,
**dadurch gekennzeichnet, dass** die Halteplatte (25) eine Lageröffnung (28) für einen Achszapfen (29) des Exzenterrades (6) aufweist.

## Claims

1. A motor-driven, handheld hedge trimmer (1) with an eccentric gear arrangement, comprising two shearing blades (2, 3), with one link (4, 5) in each case, which are driven in opposite directions about an adjustment path (a), and also an eccentric wheel (6), with a drive wheel (7) and two eccentrics (8, 9), which is driven in rotation about an axis of rotation (10), the two links (4, 5) lying directly one above the other, and the two eccentrics (8, 9) being arranged on the same side of the drive wheel (7) and engaging in each case in one of the two links (4, 5),
**characterised in that** the two shearing blades (2, 3) have contact-pressure surfaces (11, 12) in the region of their two links (4, 5), which surfaces are arranged offset relative to one another such that they are exposed at least over part of the adjustment path (a), and **in that** two holding-down means (13, 14) are provided which act, independently of each other, on one associated contact-pressure surface (11, 12) in each case.

2. A hedge trimmer according to Claim 1,
**characterised in that** the shearing blades (2, 3) in each case have a shearing section (15) and in each case a contact-pressure extension (16, 17) extending parallel to the adjustment path (a), the contact-pressure extensions (16, 17) being arranged on a rear side (18) of the shearing blades (2, 3) which lies opposite the shearing sections (15) in the direction of the adjustment path (a) and being laterally offset relative to each other in a lateral direction (19) lying transversely to the adjustment path (a), and the contact-pressure surfaces (11, 12) being formed on the contact-pressure extensions (16, 17).

3. A hedge trimmer according to Claim 2,
**characterised in that** the contact-pressure extensions (16, 17) with their contact-pressure surfaces (11, 12) have a length (1) which is at least approximately equal to the adjustment path (a).

4. A hedge trimmer according to one of Claims 1 to 3,
**characterised in that** the shearing blades (2, 3) have, laterally to the links (4, 5), sliding surfaces (20, 21) by means of which they slide on one another, **in that** the second shearing blade (3) remote from the drive wheel (7), overlapping with the associated sliding surface (21), has at least one further contact pressure surface (22), and **in that** a further holding-down means (23) which acts on the further contact-pressure surface (22) is provided.

5. A hedge trimmer according to Claim 4,
**characterised in that** sliding surfaces (20, 21), further contact-pressure surfaces (22) and further holding-down means (23) lie opposite one another in pairs relative to the adjustment path (a).

6. A hedge trimmer according to one of Claims 1 to 5,
**characterised in that** a gear housing (24) for receiving the eccentric wheel (6) and the shearing blades (2, 3) is provided in the region of their links (4, 5) and their contact-pressure surfaces (11, 12), and **in that** a holding plate (25) with the holding-down means (13, 14) is arranged in the gear housing (24).

7. A hedge trimmer according to Claim 6,
**characterised in that** also the at least one and preferably the two further holding-down means (23) are arranged on the holding plate (25).

8. A hedge trimmer according to Claim 6 or 7,
**characterised in that** the holding plate (25) including the holding-down means (13, 14) and in particular including the at least one further holding-down means (23) is formed in one piece as a shaped sheet metal part.

9. A hedge trimmer according to one of Claims 6 to 8,
**characterised in that** the gear housing (24) has a housing shell (26) and a housing cover (27), the holding plate (25) between the housing shell (26) and the housing cover (27) being held in particular by screwing and/or by clamping and/or by a positive lock.

10. A hedge trimmer according to one of Claims 6 to 9,
**characterised in that** the holding plate (25) has a bearing opening (28) for a spindle (29) of the eccentric wheel (6).

## Revendications

1. Taille-haie à main motorisé (1) avec un dispositif de transmission à excentrique, comprenant deux lames de coupe (2, 3) qui sont entraînées en sens inverse sur une course (a) et qui présentent chacune une coulisse (4, 5), et une roue à excentriques (6) qui est entraînée en rotation sur un axe de rotation (10) et qui est pourvue d'une roue d'entraînement (7) et de deux excentriques (8, 9), étant précisé que les deux coulisses (4, 5) sont directement superposées et que les deux excentriques (8, 9) sont disposés sur le même côté de la roue d'entraînement (7) et entrent prise chacun dans l'une des deux coulisses (4, 5),
**caractérisé en ce que** les deux lames de coupe (2, 3) présentent, dans la zone de leurs deux coulisses (4, 5), des surfaces de pression (11, 12) qui sont décalées l'une par rapport à l'autre de telle sorte qu'elles sont dégagées au moins sur une partie de la course (a), et **en ce qu'**il est prévu deux abaisseurs (13, 14) qui agissent chacun, indépendamment l'un de l'autre, sur une surface de pression associée (11, 12).

2. Taille-haie selon la revendication 1,
**caractérisé en ce que** les lames de coupe (2, 3) présentent chacune un tronçon de coupe (15) et un prolongement de pression (16, 17) parallèle à la course (a), étant précisé que les prolongements de pression (16, 17) sont disposés sur un côté arrière (18) des lames de coupe (2, 3) opposé aux tronçons de coupe (15), dans le sens de la course (a), et sont décalés latéralement l'un par rapport à l'autre, dans un sens latéral (19) transversal par rapport à la course (a), et que les surfaces de pression (11, 12) sont formées sur les prolongements de pression (16, 17).

3. Taille-haie selon la revendication 2,
**caractérisé en ce que** les prolongements de pression (16, 17) avec leurs surfaces de pression (11, 12) présentent une longueur (1) qui est au moins à peu près égale à la course (a).

4. Taille-haie selon l'une des revendications 1 à 3,
**caractérisé en ce que** les lames de coupe (2, 3) présentent, sur les côtés des coulisses (4, 5), des surfaces de glissement (20, 21) grâce auxquelles elles glissent l'une sur l'autre, **en ce que** la seconde lame de coupe (3), éloignée de la roue d'entraînement (7), présente au moins une autre surface de pression (22) qui recouvre la surface de glissement (21) associée, et **en ce qu'**il est prévu un autre abaisseur (23), qui agit sur cette autre surface de pression (22).

5. Taille-haie selon la revendication 4,
**caractérisé en ce que** les surfaces de glissement (20, 21), les autres surfaces de pression (22) et les autres abaisseurs (23) se font face par paires par rapport à la course (a).

6. Taille-haie selon l'une des revendications 1 à 5,
**caractérisé en ce qu'**il est prévu un carter de transmission (24) pour recevoir la roue à excentriques (6) et les lames de coupe (2, 3), dans la zone de leurs coulisses (4, 5) et de leur surfaces de pression (11, 12), et **en ce qu'**il est prévu dans le carter de transmission (24) une plaque de fixation (25) avec les abaisseurs (13, 14).

7. Taille-haie selon la revendication 6,
**caractérisé en ce que** l'autre, et de préférence les deux autres abaisseurs (23) sont disposés eux aussi sur la plaque de fixation (25).

8. Taille-haie selon la revendication 6 ou 7,
**caractérisé en ce que** la plaque de fixation (25) avec les abaisseurs (13, 14) et en particulier avec l'autre ou les autres abaisseurs (23) sont conçus d'une seule pièce comme une pièce profilée en tôle.

9. Taille-haie selon l'une des revendications 6 à 8,
**caractérisé en ce que** le carter de transmission (24) comporte une coque de carter (26) et un couvercle de carter (27), étant précisé que la plaque de fixation (25) est fixée entre la coque de carter (26) et le couvercle de carter (27) en particulier par vissage et/ou par serrage et/ou par complémentarité de forme.

10. Taille-haie selon l'une des revendications 6 à 9,
**caractérisé en ce que** la plaque de fixation (25) présente une ouverture de montage (28) pour un tourillon (29) de la roue à excentriques (6).
